(19) Europäisches Patentamt
European Patent Office
Office européen des brevets

(11) Veröffentlichungsnummer: **0 270 041**
**B1**

(12) # EUROPÄISCHE PATENTSCHRIFT

(45) Veröffentlichungstag der Patentschrift: **27.12.90**

(51) Int. Cl.$^5$: **C07F 9/42**

(21) Anmeldenummer: **87117625.1**

(22) Anmeldetag: **28.11.87**

(54) **Verfahren zur Herstellung von 2-Chlorethanphosphonsäuredichlorid.**

(30) Priorität: **02.12.86 DE 3641100**

(43) Veröffentlichungstag der Anmeldung:
**08.06.88 Patentblatt 88/23**

(45) Bekanntmachung des Hinweises auf die Patenterteilung:
**27.12.90 Patentblatt 90/52**

(84) Benannte Vertragsstaaten:
**BE CH DE FR GB IT LI NL**

(56) Entgegenhaltungen:
**EP-A- 0 227 918**
**FR-A- 2 141 962**
**US-A- 4 213 922**

**CHEMICAL ABSTRACTS, Band 74, Nr. 3, 18. Januar 1971, Seite 319, Zusammenfassung Nr. 13218e, Columbus, Ohio, US; E.L. GEFTER et al.: "Vinylphosphonic acid dichloride", & METODY POLUCH. KHIM. REAKTIVOV PREP. 1969, no. 18, 98-9**

(73) Patentinhaber: **HOECHST AKTIENGESELLSCHAFT, Postfach 80 03 20, D-6230 Frankfurt am Main 80(DE)**

(72) Erfinder: **Siegel, Herbert, Dr., Am Alten Birnbaum 10a, D-6238 Hofheim am Taunus(DE)**

**EP 0 270 041 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von 2-Chlorethanphosphonsäuredichlorid durch Umsetzung eines 2-Chlorethanphosphonsäureesters der Formel

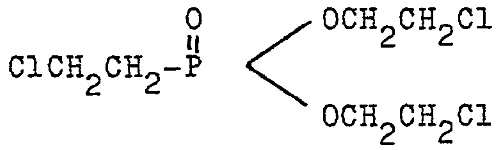

oder

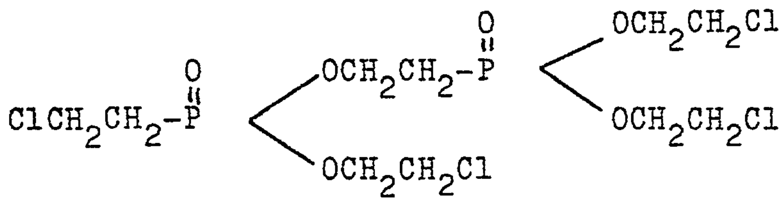

oder eines Gemisches der beiden Ester mit Thionylchlorid bei einer Temperatur von 60 bis 160 °C.

2-Chlorethanphosphonsäuredichlorid

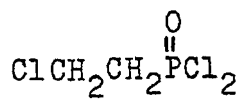

ist ein wertvolles Zwischenprodukt. Durch Hydrolyse erhält man 2-Chlorethanphosphonsäure, die als Pflanzenwachstumsbeschleuniger von Bedeutung ist. Durch Umsatz mit Hydroxyalkyl- oder Merkaptoalkylverbindungen erhält man Phosphonate oder Thiophosphonate. Derartige Verbindungen finden als Flammschutzmittel oder als Pflanzenschutzmittel Verwendung. Weiter kann aus 2-Chlorethanphosphonsäuredichlorid durch HCl-Abspaltung das Vinylphosphonsäuredichlorid hergestellt werden (CH-PS 391 699, DE-OS 1 568 945), welches seinerseits zu Vinylphosphonsäure hydrolysiert werden kann. Diese ist ein wichtiges Zwischenprodukt bei der Herstellung von Flammschutzmitteln. Außerdem ist sie ein wichtiges Monomeres bei der Herstellung von Homo- oder Mischpolymerisaten. Derartige Polymerisate sind in Lacken, Kunststoffen, Korrosionsinhibitoren und Beschichtungsmitteln von Bedeutung.

Es ist aus US PS 4 213 922 bekannt, dass man 2-Chlorethanphosphonsäuredichlorid aus den oben genannten 2-Chlorethanphosphonsäure-bis-2-chlorethylester mit Hilfe von Thionylchlorid herstellen kann. Dabei werden als Katalysatoren tertiäre Amine, N,N-disubstituierte Formamide oder N,N-disubstituierte Phosphorsäuretriamide eingesetzt. Die Ausbeute ist jedoch trotz langer Reaktionszeiten recht niedrig, wie Beispiel 4 dieser Literaturstelle zeigt.

Aus DE OS 2 132 962 ist dieselbe Umsetzung mit Hilfe von Phosgen statt Thionylchlorid bekannt. Als Katalysatoren werden dabei unter anderem Phosphor(V)-Verbindungen, wie Triphenylphosphinoxid eingesetzt. Diese Katalysatoren waren bereits Stand der Technik am Prioritätstag der US PS 4 213 922; sie werden aber bei Verfahren gemäss der US PS nicht benutzt. Offenbar wurde also bei Verwendung von Thionylchlorid die Gegenwart von Phosphor (V)-Verbindungen nicht für günstig gehalten. Die Herstellung von 2-Chlorethanphosphonsäurechlorid aus 2-Chlorethanphosphonsäureester mit Hilfe von Thionylchlorid in Gegenwart von Tetrabutylphosphoniumchlorid als Katalysator wird nun in der nicht vorveröffentlichten europäischen Patentanmeldung EP A 0 227 978 genannt.

Überraschenderweise wurde nun gefunden, dass man 2-Chlorethanphosphonsäuredichlorid in kurzer Reaktionszeit mit hohen Ausbeuten aus den genannten 2-Chlorethanphosphonsäureestern mit Hilfe von Thionylchlorid in Gegenwart von Phosphinoxiden, vorzugsweise in Kombination mit Alkali- oder Erdalkalihalogeniden herstellen kann. Die gleiche Umsetzung, jedoch unter Verwendung von tertiären Phosphinen oder Alkali- oder Erdalkalihalogeniden, wird in der nicht vorveröffentlichten europäischen Patentanmeldung EP A 0 258 805 beschrieben.

Gegenstand der Erfindung ist daher ein Verfahren zur Herstellung von 2-Chlorethanphosphonsäuredichlorid durch Umsetzung eines 2-Chlorethanphosphonsäureesters der Formel

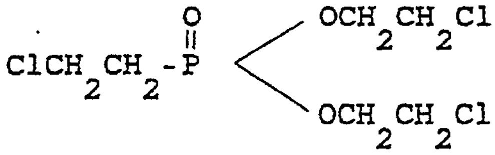

oder

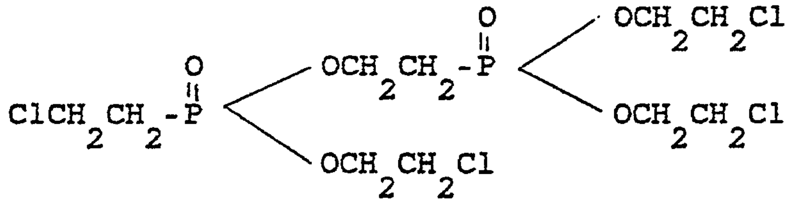

oder eines Gemisches der beiden Ester mit Thionylchlorid bei einer Temperatur von 60 bis 160 °C, dadurch gekennzeichnet, daß man die Umsetzung in Gegenwart eines Katalysators durchführt, der Phosphinoxide der allgemeinen Formel

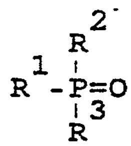

enthält, worin die Reste $R^1$, $R^2$, $R^3$ gleich oder verschieden sein können und geradkettiges oder verzweigtes $C_1$-$C_{10}$-Alkyl, Phenyl, oder mit Halogen-, $C_1$-$C_4$-Alkyl- oder $C_1$-$C_4$-Alkoxy-Resten substituiertes Phenyl bedeuten.

Vorzugsweise enthält der Katalysator zusätzlich zu den Phosphinoxiden noch Alkali- oder Erdalkalihalogenide, insbesondere Lithiumbromid.

$R^1$, $R^2$, $R^3$ sind vorzugsweise $C_1$-$C_4$-Alkylreste, Phenylreste oder in der oben angegebenen Weise substituierte Phenylreste.

Die Reaktionstemperatur beträgt 60-160 °C, vorzugsweise 60-140 °C, insbesondere 80-130 °C.

Das Molverhältnis von Thionylchlorid zum eingesetzten Ester beträgt 2:1 bis 4:1, vorzugsweise 2,5:1 bis 3,5:1.

Die Katalysatormenge beträgt 0,1 bis 10 Molprozent, vorzugsweise 0,5 bis 4 Molprozent, bezogen auf den eingesetzten Ester.

Folgende Phosphinoxide sind besonders geeignet: Triphenylphosphinoxid, Tris(4-Fluorphenyl)phosphinoxid, Tris(4-Tolyl)phosphinoxid, Tris(4-Methoxyphenyl)phosphinoxid, (N,N-Diethyl)aminomethyldiphenylphosphinoxid, Tri-n-butylphosphinoxid, Bis(4-Methoxyphenyl)methylphosphinoxid. Ganz besonders geeignet ist Triphenylphosphinoxid, vor allem in Kombination mit Lithiumbromid im Molverhältnis 10:1 bis 1:10, vorzugsweise 1:1 bis 1:5 ($Ph_3PO$:LiBr). Die beiden Komponenten wirken kooperativ. Dadurch wird eine Senkung der Temperatur möglich oder eine verkürzte Reaktionszeit erreicht, im Vergleich zur separaten Verwendung von Triphenylphosphinoxid.

Das Thionylchlorid wird vorzugsweise in den vorgelegten Ester eingeleitet, um eine ausreichende Reaktionszeit für die relativ reaktionsträgen Phosphonsäureester zu gewährleisten. Besonders bevorzugt ist es, das Thionylchlorid am Boden des Reaktionsgefäßes in den vorgelegten Ester einzuleiten.

Das während der Reaktion abgespaltene Dichlorethan, das bei der eingestellten Reaktionstemperatur abdestilliert und mit zunehmendem Umsatz Thionylchlorid aus dem Reaktionsgefäß austrägt, wird vorzugsweise kondensiert und wieder zurückgeführt. Durch die so bewirkte Kreisführung des unumgesetzten Thionylchlorids wird dieses optimal ausgenützt.

Man kann die Reaktion auch in Gegenwart eines inerten Lösungsmittels durchführen. Als Beispiele seien genannt: Chlorbenzol, Dichlorbenzol oder Kohlenwasserstoffe. Vorzugsweise arbeitet man auch jetzt bei 80 bis 130 °C.

Das Ende der Reaktion erkennt man daran, daß die Entwicklung von $SO_2$ und HCl aufhört.

Zur Aufarbeitung des Reaktionsgemischs destilliert man das entstandene Dichlorethan und ggf. das unumgesetzte Thionylchlorid ab. Das gebildete 2-Chlorethanphosphonsäuredichlorid kann durch Destillation gereinigt werden.

Die folgenden Beispiele sollen die Erfindung erläutern. Als Ausgangsmaterial wurde roher 2-Chlorethanphosphonsäure-bis-2-chlorethylester verwendet, wie er bei der Arbusow-Umlagerung von Tris-2-chlorethylphosphit $P(OCH_2CH_2Cl)_3$ (DE-OS 2 132 962; Houben-Weyl, Band XII/1 (1963), Seite 389)

durch Erhitzen auf 140 °C erhalten wird. Der rohe Ester bestand zu etwa 55 % aus 2-Chlorethanphosphonsäure-bis-2-chlorethylester

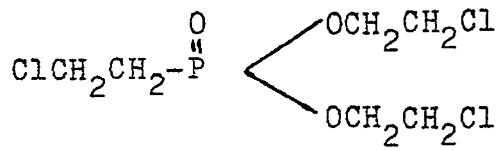

und etwa 38 % 2-Chlorethanphosphonsäuremono-2-chlorethylmono(2-chlorethanphosphonsäure-bis-2-chlorethylester)ester

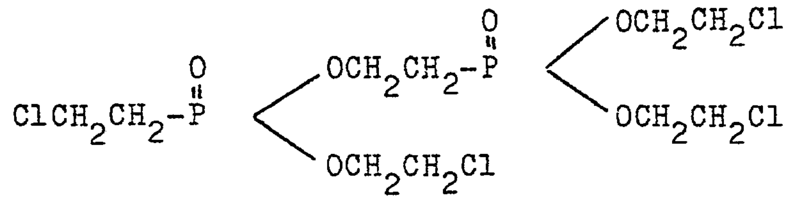

Alle Ansätze und Ausbeuten wurden auf den Reingehalt von 93 % bezogen.

Beispiel 1

150 g roher 2-Chlorethanphosphonsäure-bis-chlorethylester und 149,1 g (1,25 Mol) Thionylchlorid wurden innerhalb von 30 Minuten in Gegenwart von 1,1 g Triphenylphosphinoxid auf 130 °C erhitzt. Abgespaltenes Dichlorethan und unumgesetztes Thionylchlorid destillierten über eine Kolonne in eine Vorlage und wurden über ein Tauchrohr am Boden des Reaktionsgefäßes in die Reaktionsmischung zurückgeführt. Man erhitzte weitere 5,5 Stunden unter ständiger Rückführung von unumgesetztem Thionylchlorid und destillierte dann zunächst bei Normaldruck und dann bei 150-250 mbar und 50-70 °C die leichtflüchtigen Bestandteile aus dem Reaktionsgemisch ab. Man erhielt 107,4 g Destillat, das noch 20,6 % unumgesetztes Thionylchlorid enthielt. Anschließend wurden bei 4-5 mbar und 42-83 °C als Hauptlauf 81,5 g (84 % der Theorie) farblose Flüssigkeit erhalten, die zu 90 Gew.-% aus 2-Chlorethanphosphonsäuredichlorid und zu 10 Gew.-% aus Vinylphosphonsäuredichlorid bestand.

Beispiel 2

Analog Beispiel 1 wurden 150 g roher 2-Chlorethanphosphonsäure-bis-chlorethylester und 149,1 g (1,25 Mol) Thionylchlorid in Gegenwart von 0,99 g (11,4 mMol) LiBr und 1,1 g (3,96 mMol) Triphenylphosphinoxid innerhalb von 30 Minuten auf 100 °C erhitzt und das Reaktionsgemisch 5,5 Stunden bei dieser Temperatur gehalten. Das abdestillierende Gemisch aus Thionylchlorid und Dichlorethan wurde während dieser Zeit kontinuierlich über ein Tauchrohr am Boden des Reaktionsgefäßes im Kreislauf zurückgeführt. Bei der destillativen Aufarbeitung, wie in Beispiel 1 beschrieben, erhielt man 104,0 g Vorfraktion, die aus 79,8 g Dichlorethan und 24,2 g Thionylchorid bestand. Als Hauptfraktion gingen 78,5 g (80 % der Theorie) 2-Chlorethanphosphonsäuredichlorid und Vinylphosphonsäuredichlorid im Gewichtsverhältnis 97:3 über.

Beispiel 3

Analog Beispiel 2 wurden 150 g roher 2-Chlorethanphosphonsäure-bis-chlorethylester und 149,1 g (1,25 Mol) Thionylchlorid in Gegenwart von 2,12 g (7,35 mMol) Triphenylphosphinoxid innerhalb von 30 Minuten auf 100 °C erhitzt. Man rührte 5,5 Stunden bei 100 °C, wobei das abdestillierende Gemisch aus Thionylchlorid und Dichlorethan kontinuierlich über ein Tauchrohr am Boden des Reaktionsgefäßes im Kreislauf zurückgeführt wurde. Die destillative Aufarbeitung analog Beispiel 2 ergab 100,3 g Vorfraktion, die aus 66,6 g Dichlorethan und 33,7 g Thionylchlorid bestand. Als Hauptfraktion gingen 48,5 g (49 % der Theorie) 2-Chlorethanphosphonsäuredichlorid und Vinylphosphonsäuredichlorid im Gewichtsverhältnis 97:3 über.

## Patentansprüche

1. Verfahren zur Herstellung von 2-Chlorethanphosphonsäuredichlorid durch Umsetzung eines 2-Chlorethanphosphonsäureesters der Formel

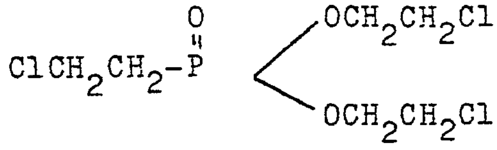

oder

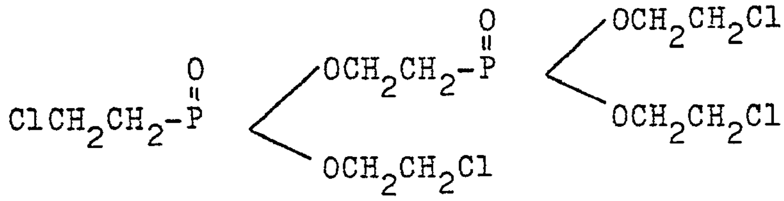

oder eines Gemisches der beiden Ester mit Thionylchlorid bei einer Temperatur von 60 bis 160 °C, dadurch gekennzeichnet, daß man die Umsetzung in Gegenwart eines Katalysators durchführt, der Phosphinoxide der allgemeinen Formel

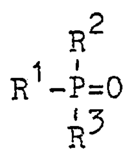

enthält, worin die Reste $R^1$, $R^2$, $R^3$ gleich oder verschieden sein können und geradkettiges oder verzweigtes $C_1$-$C_{10}$-Alkyl, Phenyl, oder mit Halogen-, $C_1$-$C_4$- Alkyl- oder $C_1$-$C_4$-Alkoxy-Resten substituiertes Phenyl bedeuten.

2. Verfahren nach Anspruch 1, dadurch gekennzeichnet, daß man einen Katalysator einsetzt, der zusätzlich zu den Phosphinoxiden noch Alkali- oder Erdalkalihalogenide enthält.

3. Verfahren nach Anspruch 1, dadurch gekennzeichnet, daß man einen Katalysator einsetzt, der zusätzlich zu den Phosphinoxiden noch Lithiumbromid enthält.

4. Verfahren nach Anspruch 1, dadurch gekennzeichnet, daß man als Katalysator Triphenylphosphinoxid oder die Kombination von Triphenylphosphinoxid mit Lithiumbromid einsetzt.

5. Verfahren nach einem der Ansprüche 1 bis 4, dadurch gekennzeichnet, daß man das während der Reaktion abgespaltene und zusammen mit unumgesetztem Thionylchlorid abdestillierende Dichlorethan kondensiert und zurückführt.

6. Verfahren nach mindestens einem der Ansprüche 1 bis 5, dadurch gekennzeichnet, daß man das Thionylchlorid in den vorgelegten Ester einleitet.

7. Verfahren nach mindestens einem der Ansprüche 1 bis 5, dadurch gekennzeichnet, daß man das Thionylchlorid am Boden des Reaktionsgefäßes in den vorgelegten Ester einleitet.

**Revendications**

1. Procédé pour préparer le dichlorure de l'acide chloro-2 éthane-phosphonique par réaction d'un ester de l'acide chloro-2 éthane-phosphonique répondant à l'une des formules suivantes:

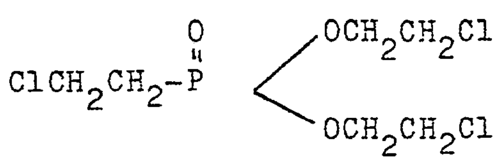

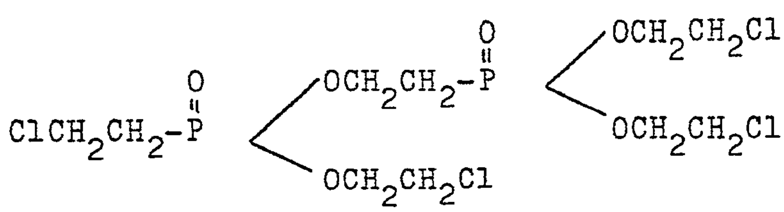

ou d'un mélange des deux esters, avec le chlorure de thionyle, à une température de 60 à 160°C, procédé caractérisé en ce qu'on effectue la réaction en présence d'un catalyseur contenant des oxydes de phosphines répondant à la formule générale:

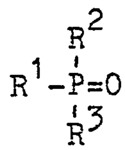

dans laquelle $R^1$, $R^2$ et $R^3$ représentent chacun, indépendamment les uns des autres, un alkyle en $C_1$–$C_{10}$, linéaire ou ramifié, un phényle ou un phényle porteur d'un halogène, d'un alkyle en $C_1$–$C_4$ ou d'un alcoxy en $C_1$–$C_4$.

2. Procédé selon la revendication 1 caractérisé en ce qu'on utilise un catalyseur qui, en plus des oxydes de phosphines, contient des halogénures de métaux alcalins ou de métaux alcalino-terreux.

3. Procédé selon la revendication 1 caractérisé en ce qu'on utilise un catalyseur qui, en plus des oxydes de phosphines, contient du bromure de lithium.

4. Procédé selon la revendication 1 caractérisé en ce qu'on utilise, comme catalyseur, l'oxyde de triphénylphosphine ou une association d'oxyde de triphénylphosphine et de bromure de lithium.

5. Procédé selon l'une quelconque des revendications 1 à 4, caractérisé en ce que le dichloréthane qui est libéré au cours de la réaction et qui s'échappe par distillation avec le chlorure de thionyle n'ayant pas réagi est condensé et recyclé.

6. Procédé selon au moins une des revendications 1 à 5, caractérisé en ce qu'on introduit le chlorure de thionyle dans l'ester préalablement mis en place.

7. Procédé selon au moins une des revendications 1 à 5, caractérisé en ce qu'on introduit le chlorure de thionyle dans l'ester préalablement mise en place, en le faisant arriver au fond du récipient réactionnel.

**Claims**

1. A process for the preparation of 2-chloroethanephosphonyl dichloride by reaction of an ester of 2-chloroethanephosphonic acid of the formula

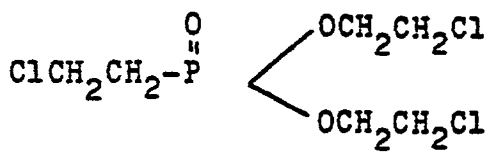

or

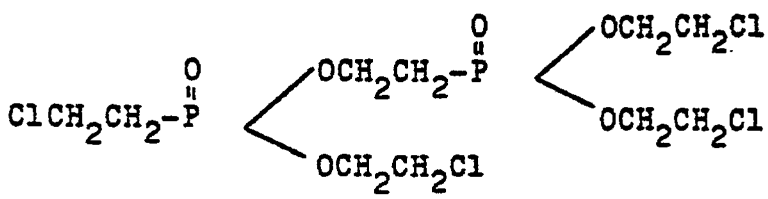

or a mixture of the two esters with thionyl chloride at a temperature of 60 to 160°C, which comprises carrying out the reaction in the presence of a catalyst which contains phosphine oxides of the formula

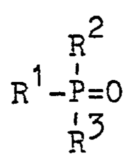

in which the radicals $R^1$, $R^2$ and $R^3$ can be identical or different and denote straight-chain or branched $C_1$–$C_{10}$-alkyl, phenyl, or phenyl which is substituted with halogen radicals, $C_1$–$C_4$-alkyl radicals or $C_1$–$C_4$-alkoxy radicals.

2. The process as claimed in claim 1, wherein a catalyst is employed which also contains alkali metal halides or alkaline earth metal halides in addition to the phosphine oxides.

3. The process as claimed in claim 1, wherein a catalyst is employed which also contains lithium bromide in addition to the phosphine oxides.

4. The process as claimed in claim 1, wherein triphenylphosphine oxide or a combination of triphenylphosphine oxide with lithium bromide is employed as the catalyst.
5. The process as claimed in one of claims 1 to 4, wherein the dichloroethane which is eliminated and removed by distillation, together with unreacted thionyl chloride, during the reaction is condensed and recycled.
6. The process as claimed in at least one of claims 1 to 5, wherein the thionyl chloride is added to the initially introduced ester.
7. The process as claimed in at least one of claims 1 to 5, wherein the thionyl chloride is added at the bottom of the reaction vessel to the initially introduced ester.